(19) Europäisches Patentamt

European Patent Office

Office européen des brevets

(11) EP 1 241 495 A2

(12) **EUROPEAN PATENT APPLICATION**

(43) Date of publication:
18.09.2002 Bulletin 2002/38

(51) Int Cl.⁷: **G02B 6/22**, G02B 6/18

(21) Application number: 02005992.9

(22) Date of filing: 15.03.2002

(84) Designated Contracting States:
**AT BE CH CY DE DK ES FI FR GB GR IE IT LI LU MC NL PT SE TR**
Designated Extension States:
**AL LT LV MK RO SI**

(30) Priority: 16.03.2001 JP 2001076969

(71) Applicant: **The Furukawa Electric Co., Ltd.**
**Tokyo 100-8322 (JP)**

(72) Inventor: **Mukasa, Kazunori**
**Chiyoda-ku, Tokyo 100-8322 (JP)**

(74) Representative:
**Schmidt-Evers, Jürgen, Dipl.-Ing. et al**
**Patentanwälte Mitscherlich & Partner,**
**Sonnenstrasse 33**
**80331 München (DE)**

(54) **Optical fiber and wavelength division multiplex transmission line**

(57)　　An optical fiber (1) suitable for connection with a single mode optical fiber for wavelength division multiplex transmission, that is, a reverse dispersion fiber (RDF) having a center core (11) and a side core layer (12), wherein an apparent refractive index difference of the center core is 1.15 to 1.40%, a constant $\alpha$ expressing a profile of a distribution of refractive index of the center core (11) is 1.0 to 5.0, an apparent refractive index difference of the side core layer (12) is -0.60 to -0.35, a diameter ratio (b/a) of a diameter (b) of the first side core layer (12) to a diameter (a) of the center core (11) is 1.6 to 2.4, a dispersion value is -60 to -35 ps/nm/km and a dispersion slope is -0.40 to -0.10 ps/nm²/km when a wavelength of light propagated through the center core (11) is the 1.55 μm band, a transmission loss of not more than 0.35 dB/km, a ratio of loss to dispersion (figure of merit (FOM)) of 120 to 500 (ps/nm)/dB, a polarization mode dispersion (PMD) of not more than 0.15 ps/√km, and an effective core area (Aeff) of 19 to 50 μm² when the wavelength of the light propagated through the center core (11) is the 1.55 μm band, and a bending loss at a diameter of 20 mm of not more than 5 dB/m.

## FIG. 1B

EP 1 241 495 A2

**Description**

BACKGROUND OF THE INVENTION

1. Field of the Invention

The present invention relates to an optical fiber, more particularly relates to a reverse dispersion (optical) fiber (RDF) for realizing optimal characteristics when connected with a single mode optical fiber (SMF) to form a transmission line.

More specifically, the present invention relates to an optical fiber for wavelength division multiplex (WDM) transmission and a WDM transmission line suitable for when connecting this optical fiber and an SMF.

2. Description of the Related Art

In recent years, as typified by WDM transmission, there has been a strong demand for realization of broadband communications for long distance transmission of a large number of different high frequency pulse signals over a single optical fiber transmission line. Various severe requirements are placed on such broadband communications such as a small dispersion in addition to a reduction of the transmission loss.

As one method for satisfying this demand, the idea has been proposed of connecting the SMF used broadly up until now with a dispersion-compensation optical fiber (DCF) to satisfy these requirements as a whole.

Such a DCF is not a conventional DCF module, but an RDF used as a line connected with an SMF. Intensive studies are underway toward its practical use.

A 1.31 zero-dispersion SMF having a dispersion of 0 ps/nm/km at a wavelength of 1.31 μm is a line (optical fiber) extremely superior in characteristics such as the non-linearity, transmission loss, and polarization mode dispersion (PMD), but has a large positive dispersion value and positive dispersion slope (ratio of change in dispersion with respect to change in wavelength) at a wavelength of the 1.55 μm band, so with an SMF alone, it is difficult to transmit an optical signal of a wavelength of the 1.55 μm band over a long distance without signal distortion. Accordingly, realization of WDM transmission has been difficult by an SMF alone. Therefore, dispersion compensation becomes necessary.

Accordingly, intensive effort is under way in research and practical application of a DCF compensating for dispersion and enabling transmission in the 1.55 μm band when connected with an SMF while making active use of the advantages of the characteristics of a 1.31 zero-dispersion SMF.

As such a DCF, for example, a DCF which compensates for the positive dispersion possessed by a 1.31 zero-dispersion SMF by raising the apparent refractive index difference of the center core higher by at least 2.0% to gain a large negative dispersion when connected with the SMF and thereby achieving an overall high figure of merit (FOM, that is, ratio of loss to dispersion (dispersion/transmission loss)), for example, an FOM of about 200 ps/nm/dB, when connected with the SMF, is being developed.

Further, a slope compensation type DCF simultaneously compensating for the dispersion slope is being looked at closely for WDM transmission. With such a slope compensation type DCF, control of not only the FOM, but also the dispersion slope becomes important.

The dispersion-compensation performance when connecting a 1.31 zero-dispersion SMF and the above-mentioned DCF can be easily understood if expressed by a compensation rate CR defined by the following formula:

$$\text{Compensation rate (\%)}$$

$$= [(\text{Slope}_{DCF}/\text{Slope}_{SMF}) / (\text{Dispersion}_{DCF}/\text{Dispersion}_{SMF})] \times 100$$

In formula 1, $\text{Slope}_{DCF}$ indicates the dispersion slope of the DCF ($ps/nm^2/km$), $\text{Slope}_{SMF}$ indicates the dispersion slope of the SMF, for example, a 1.31 zero-dispersion SMF ($ps/nm^2/km$), $\text{Dispersion}_{DCF}$ indicates the dispersion of the DCF (ps/nm/km), and $\text{Dispersion}_{SMF}$ indicates the dispersion of the 1.31 zero-dispersion SMF (ps/nm/km).

When a compensation rate CR in formula 1 is close to 100 %, a broadband zero-dispersion becomes possible. In other words, it means that when the DPS of dispersion-compensation optical fiber (DCF) is close to the DPS of single mode optical fiber, a zero-flat dispersion in broadband becomes possible.

Note that "DPS" is an abbreviation for "dispersion per slope" and shows the ratio of the dispersion slope to the dispersion, that is, the dispersion/dispersion slope (nm).

Japanese Unexamined Patent Publication (Kokai) No. 8-136758 proposes an optimal design for such a modular DCF.

The optical fiber disclosed in Japanese Unexamined Patent Publication (Kokai) No. 8-136758 and other such optical fibers, however, have up to now been modular DCFs aimed at shortening the length. The effective core area Aeff in general is a small 18 $\mu m^2$ or less and the apparent refractive index difference is high. Therefore, a non-linear phenomenon easily occurs. Further, the value of the transmission loss or PMD of such a modular dispersion-compensation optical fiber (DCF) is large.

Accordingly, the modular DCF such as disclosed in Japanese Unexamined Patent Publication (Kokai) No. 8-136758 is not suited for connection with a SMF, for example, a 1.31 zero-dispersion SMF, for realizing the WDM transmission aimed at by the present invention.

Recently, as a new approach, ECOC' 97, vol. 1, p. 127, proposes the method of compensating for dispersion by connecting an RDF having a reverse dispersion characteristic to the SMF.

The dispersion value of such an RDF, however, is only about -15 to -30 ps/nm/km. When connecting with an SMF, it is assumed that the ratio of lengths of the SMF and RDF is made about 1:1 to construct the line. Even if an RDF having such a dispersion value is connected to an SMF, however, the performance aimed at by the present invention cannot be achieved.

An RDF having a dispersion value compensating for the positive dispersion value of the SMF is being looked at closely, but up until now there have been no good reports on the optimal characteristics and optimal design, including the dispersion value, dispersion slope, non-linearity, transmission loss, and PMD satisfying such a requirement.

According to research by the present inventor, with such an RDF, since the RDF occupies about half of the line, a relatively large power is propagated through the RDF over a long distance and as a result the problem of non-linearity arises.

When connecting an SMF and an RDF, a lower absolute value of dispersion of the RDF enables the length of the low non-linear SMF to be made longer and enables the ratio of the length of the SMF to the RDF (length ratio) to be made larger, so there is the advantageous characteristic that the total non-linearity of the line can be reduced.

Therefore, an attempt was made to construct a line by connecting an optical fiber having a dispersion value of less than the large dispersion value, for example, -60 ps/nm/km, of a conventional DCF with an SMF, but as explained above, problems remained in respect to the transmission loss and PMD.

For example, a conventional DCF has a transmission loss in the 1.55 $\mu m$ wavelength band of more than 0.4 dB/km and a PMD of more than 0.2 ps/√km. Further, it harbors the defect of an increase in the signal distortion due to the accumulate dispersion.

Use of such a conventional DCF as an optical fiber (line) for connection with an SMF is difficult from a practical perspective.


SUMMARY OF THE INVENTION

An object of the present invention is to provide an RDF satisfying various characteristics and able to exhibit good performance when used connected with an SMF, for example, a 1.31 zero-dispersion SMF.

Another object of the present invention is to provide an optical fiber transmission line able to realize WDM transmission, broadband multiplex transmission, etc. by connecting an SMF, for example, a 1.31 zero-dispersion SMF, and such a good RDF.

The present inventor proposes a new type of RDF having a dispersion value of -60 to -35 ps/nm/km and a dispersion slope of -0.10 ps/nm$^2$/km in the 1.55 $\mu m$ wavelength band of the light used for the transmission along the optical fiber.

The present inventor selected -60 to -35 ps/nm/km as the dispersion value advantageous in terms of non-linearity and loss and found the optimal design of the RDF for the same. As a result, he found that by using an optical fiber having a profile of the apparent refractive index difference of the center core of 1.2 to 1.4%, a constant $\alpha$ expressing the profile of the refractive index distribution of the center core of 1.0 to 5.0, an apparent refractive index difference of the side core of -0.60 to -0.35%, and a ratio of the diameter $\underline{b}$ of the side core to the diameter $\underline{a}$ of the center core (diameter ratio) of 1.6 to 2.4, an RDF having a low loss of a transmission loss of less than 0.27 dB/km, a low PMD of less than 0.15 ps/√km, and a low bending loss characteristic of a loss of less than 5 dB/m at a curvature of 20 mmφ while having an effective core area Aeff of more than 19 $\mu m^2$ could be realized.

Further, he learned that in a structure adding a second side core layer to the outside of the center core, the effective core area Aeff can be increased to more than 23 $\mu m^2$ by optimizing the apparent refractive index difference of the center core, first side core layer, and second side core layer, the diameter ratio of the side cores, etc.

The "effective core area Aeff" means the effective region of propagation of the LP$_{01}$ mode and is defined by the following formula 2 when expressing the electric field distribution in the optical fiber by E(r) (where r indicates a position in the radial direction of the optical fiber).

$$Aeff = \frac{2\pi[\int\limits_0^\infty E(r)^2 r dr]^2]}{\int\limits_0^\infty E(r)^4 r dr} \quad ...(2)$$

According to a first aspect of the present invention, there is provided an optical fiber having a center core and a first side core formed at the outside of the center core and having an apparent refractive index difference of the center core of 1.15 to 1.40%, a constant $\alpha$ expressing the profile of the refractive index distribution of the center core of 1.0 to 5.0, an apparent refractive index difference of the first side core of -0.60 to -0.35%, a diameter ratio (b/a) of the diameter $\underline{b}$ of the first side core to the diameter $\underline{a}$ of the center core of 1.6 to 2.4, a dispersion value of -60 to -35 ps/ nm/km and a dispersion slope of -0.40 to -0.10 ps/nm$^2$/km when the wavelength of the light propagated through the center core is the 1.55 $\mu$m band, a transmission loss of 0 to 0.35 dB/km when the wavelength of the light propagated through the center core is the 1.55 $\mu$m band, a ratio of the loss to the dispersion (FOM), that is, dispersion/loss) of 120 to 500 ps/nm/dB, a PMD of 0 to 0.15 ps/√km, an effective core area Aeff of 19 to 50 $\mu$m$^2$, and a bending loss at a diameter of 20 mm of 0 to 5 dB/m.

According to a second aspect of the present invention, there is provided an optical fiber having a center core and a first side core formed at the outside of the center core and having an apparent refractive index difference of the center core of 0.9 to 1.4%, a constant $\alpha$ expressing the profile of the refractive index distribution of the center core of 1.0 to 5.0, an apparent refractive index difference of the first side core of -0.65 to -0.35%, a diameter ratio (b/a) of the diameter $\underline{b}$ of the first side core to the diameter $\underline{a}$ of the center core of 1.6 to 2.4, a dispersion value of -60 to -35 ps/ nm/km and a dispersion slope of -0.40 to -0.05 ps/nm$^2$/km when the wavelength of the light propagated through the center core is the 1.55 $\mu$m band, a transmission loss of 0 to 0.35 dB/km when the wavelength of the light propagated through the center core is the 1.55 $\mu$m band, a ratio of the loss to the dispersion (FOM, that is, dispersion/loss) of 120 to 500 ps/nm/dB, a PMD of 0 to 0.15 ps/√km, an effective core area Aeff of 19 to 50 $\mu$m$^2$, and a bending loss at a diameter of 20 mm of 0 to 20 dB/m.

The wavelength of the 1.55 $\mu$m band is the band of a wavelength of 1.40 to 1.65 $\mu$m.

According to a third aspect of the present invention, there is further provided a second side core layer formed at the outside of the first side core layer and having an apparent refractive index difference of 0.05 to 0.35% and a diameter ratio (c/b) of the diameter $\underline{c}$ to the diameter $\underline{b}$ of the first side core of 1.3 to 1.7.

According to a fourth aspect of the present invention, there is provided a WDM transmission line characterized by connecting a 1.31 zero-dispersion SMF or a positive dispersion optical fiber having characteristics resembling the characteristics of the SMF and an optical fiber of the above first to third aspects to suppress the dispersion of a specific wavelength of the 1.5 $\mu$m band to a low dispersion.

BRIEF DESCRIPTION OF THE DRAWINGS

These and other objects and features of the present invention will become clearer from the following description given with reference to the attached drawings, in which:

FIGS. 1A and 1B are views illustrating an RDF having a W-shaped refractive index profile as a first embodiment of the optical fiber of the present invention, where FIG. 1A is a sectional view of an RDF of the first embodiment and FIG. 1B is a view illustrating the refractive index profile of the RDF illustrated in FIG. 1A;

FIG. 2 is a graph of the results of investigation of the apparent refractive index difference of the center core, the dispersion-compensation rate with respect to an SMF, and the transmission loss;

FIGS. 3A and 3B are views illustrating an RDF having a (W-shaped + side core) refractive index profile as a second embodiment of the optical fiber of the present invention, where FIG. 3A is a sectional view of an RDF of the second embodiment of the present invention and FIG. 3B is a view illustrating the refractive index distribution of the RDF illustrated in FIG. 3A;

FIG. 4A illustrates a basic configuration comprised of an SMF and RDF connected in a 1:1 relationship, while FIG. 4B is a view of the configuration when a plurality of unit lines of the SMF and RDF illustrated in FIG. 4A are connected; and

FIG. 5 is a graph illustrating the wavelength loss characteristic of an RDF of an embodiment of the present invention.

DESCRIPTION OF THE PREFERRED EMBODIMENTS

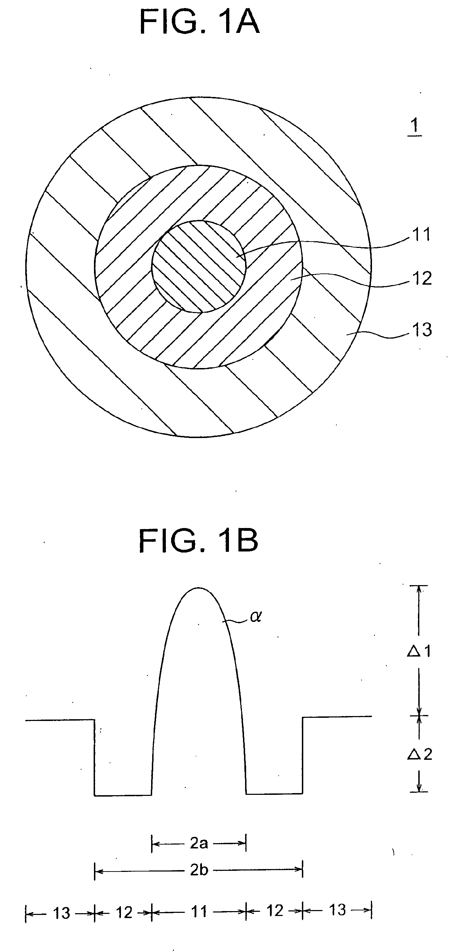

Embodiments of the optical fiber of the present invention will be described next with reference to the attached drawings FIG. 1 to FIG. 5.

First Embodiment

FIG. 1A is a sectional view of an RDF of the present invention, while FIG. 1B is a view illustrating the refractive index distribution of the RDF illustrated in FIG. 1A.

The RDF 1 of the first embodiment of the present invention is an optical fiber suitable for constructing a transmission line by connecting with an SMF in the case of WDM transmission.

The RDF 1 illustrated in FIG. 1A has a center core 11, a side core layer (or a depressed layer) 12 formed around the same, and a cladding layer 13 formed around the side core layer 12.

As illustrated in FIG. 1B, the center core 11 has an apparent refractive index difference Δ1, the side core layer 12 has an apparent refractive index difference Δ2, and the refractive index distribution is W-shaped.

The profile of the refractive index distribution (or apparent refractive index difference distribution) of the center core 11 is shown by the parameter α.

The parameter α is defined by the following formula 3:

$$n^2(\tfrac{r}{a})=n_0^2[1-2\cdot\frac{n_1-n_2}{n_1}\cdot(\tfrac{r}{a})^a] \qquad (3)$$

$$0 \le \frac{r}{a} \le 1$$

The diameter of the center core 11 is designated as 2a, while the diameter of the side core layer 12 is designated as 2b. The ratio b/a of the diameter of the center core 11 and the diameter of the side core 12 is called the diameter ratio.

As illustrated in FIGS. 1A and 1B, the RDF having the side core 12 around the center core 11 and having the apparent refractive index difference (or refractive index) profile based of the W-shape is simple in structure while having a high dispersion-compensation performance, so has the advantage of being relatively easy to manufacture.

The present inventor found the optimum conditions for an RDF when connecting this RDF to an SMF, for example, a 1.31 zero-dispersion SMF having zero dispersion when propagating light of a wavelength of 1.31 μm for use in WDM transmission etc. The optimum conditions are given below.

The dimensions of the optical fiber are shown in the following Table 1:

Table 1

|  | Dispersion (ps/nm/km) | Slope (ps/nm$^2$/km) | Aeff (μm$^2$) | DPS (nm) | λc (nm) | Bending loss (dB/m) |
|---|---|---|---|---|---|---|
| SMF | 16.5 | 0.060 | 75 | 260 | 1250 | 1.0 |

Basic Conditions

(1) The absolute value of the dispersion of the RDF should be made as large as possible. The reason is that if the absolute value of the dispersion is large, it is possible to sufficiently compensate for the dispersion when connected with an SMF. In particular, connection with a large positive dispersion SMF becomes possible. Further, as explained above, there are various advantages if the absolute dispersion value is large.

(2) The ratio of the dispersion slope to the dispersion, an indicator of the compensation rate (dispersion/dispersion slope, DPS) should be good. As a target, the DPS is preferably 200 to 400 nm or about the same as the DPS of a SMF. If so, when connecting the SMF and RDF, the compensation rate becomes close to 100%, so a preferable compensation rate is obtained.

(3) The effective core area Aeff should be larger than the effective core area Aeff of a conventional DCF. For example, the DCF of the RDF is at least 19 μm$^2$. The Aeff of the DCF used in modules in the past was less than 19 μm$^2$, but this was not preferable in view of the non-linearity.

Note that the maximum value of the effective core area Aeff is preferably substantially the same value as the effective core area Aeff of the SMF to be connected with. In the present embodiment, the effective core area Aeff of the 1.31 zero-dispersion SMF is 50 to 190 $\mu m^2$. The effective core area Aeff is preferably large, but if it is attempted to make it larger than 50 $\mu m^2$, the bending loss becomes much greater. Therefore, the effective core area Aeff is preferably a value in this range.

From the above conditions (1) and (2), the value of the dispersion of the RDF in the 1.55 $\mu m$ band was made less than -35 ps/nm/km and the value of the dispersion slope was made less than -0.10 $ps/nm^2$/km.

The range of the dispersion value was -35 to -60 ps/nm/km.

The range of the dispersion slope was -0.30 to -0.10 $ps/nm^2$/km.

In the case of such a dispersion value and dispersion slope value, when connecting with the SMF, the compensation rate shown in formula 1 can be maintained high.

The compensation rate is preferably in a range of about 100 to 85%.

In general, in a W-shape based profile, if the apparent refractive index difference Δ1 of the center core 11 is made large, the absolute value of the dispersion can be made large.

Therefore, the present inventor determined the apparent refractive index difference Δ1 of the center core to be at least 1.15% in order to increase the dispersion from that of the RDF disclosed in ECOC' 97, vol. 1, p. 127 where the apparent refractive index difference Δ1 of the center core 11 is described as about 1.1%. Note that to completely eliminate the effect of the bending loss, the apparent refractive index difference Δ1 is preferably made at least 1.20%.

It was confirmed that as a result of the design, an RDF having a dispersion value of not more than -35 ps/nm/km was obtained.

When the apparent refractive index difference Δ1 of the center core 1 is less than 1.15%, if trying to make the dispersion less than -35 ps/nm/km, it was learned that the bending loss or the dispersion-compensation rate becomes worse.

In this sense, if raising the apparent refractive index difference Δ1 of the center core 11, a good (large absolute value) dispersion characteristic can be obtained, but if the apparent refractive index difference Δ1 is raised, the demerit of the transmission loss and the PMD increasing is encountered. If the apparent refractive index difference Δ1 is made larger, increasing the compensation rate also tends to become more difficult.

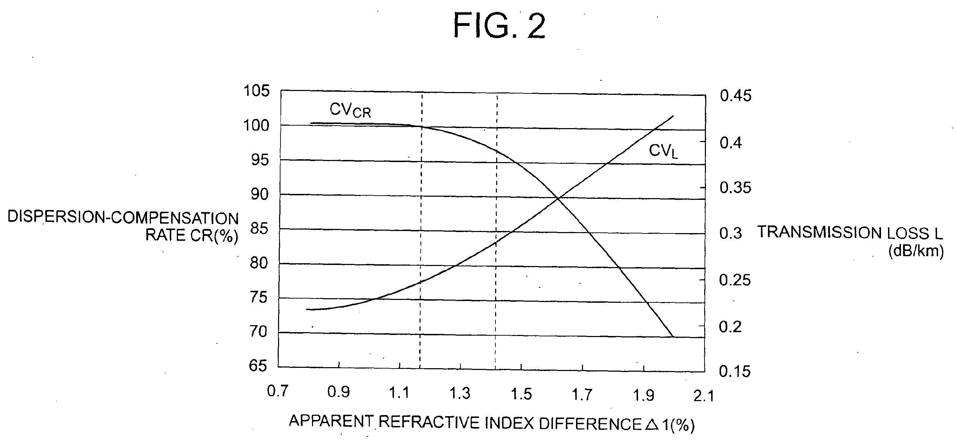

This relationship was analyzed. The results are shown in FIG. 2.

FIG. 2 is a graph of the results of investigation of the dispersion-compensation rate and the transmission loss with respect to an apparent refractive index difference Δ1 of the center core 11 and an SMF. In the results of the investigation, the parameters other than the W-shape profile were fixed.

In FIG. 2, the curve $CV_{CR}$ shows the change in the dispersion-compensation rate, while the curve $CV_L$ shows the change in the transmission loss.

As will be understood from the graph illustrated in FIG. 2, if the apparent refractive index difference Δ1 of the center core 11 is raised, the dispersion-compensation rate falls and the transmission loss increases. Therefore, it was learned that it is not possible to increase the apparent refractive index difference Δ1 of the center core 11 unconditionally.

From the above viewpoint, the suitable range of the apparent refractive index difference Δ1 was made the region where the transmission loss gradually rises and where a high compensation rate can be maintained to a certain extent, that is, an apparent refractive index difference Δ1 of the center core 11 of 1.15% to 1.40%. The compensation rate at this time, as clear from FIG. 2, is a high one of about 100 to 97%.

By doing this, it is possible to expect the value of the PMD, which is greatly dependent on the apparent refractive index difference Δ1 of the center core 11, to be held to a small value of for example less than 0.15 ps/$\sqrt{km}$.

As one example, the change in characteristics was investigated when setting the apparent refractive index difference Δ1 of the center core 11 as 1.30% and making the constant α expressing the profile of the refractive index distribution of the center core 11, the apparent refractive index difference Δ2 of the side core layer 12, the ratio of the diameter 2a of the center core 11 and the diameter 2b of the side core layer 12, and the diameter ratio b/a variables. The results are shown in Table 2.

Table 2.

| Results of Simulation When Changing b/a | | | | | |
|---|---|---|---|---|---|
| b/a | Dispersion (ps/nm/km) | Slope ($ps/nm^2$/km) | DPS (nm) | Aeff ($\mu m^2$) | λc (nm) |
| 1.70 | -44.1 | -0.071 | 623 | 22.4 | 788 |
| 1.75 | -43.0 | -0.091 | 470 | 21.5 | 793 |
| 1.80 | -41.8 | -0.109 | 385 | 20.8 | 797 |
| 1.85 | -40.6 | -0.119 | 340 | 20.3 | 802 |

Table 2.   (continued)

| Results of Simulation When Changing b/a | | | | | |
|---|---|---|---|---|---|
| b/a | Dispersion (ps/nm/km) | Slope (ps/nm$^2$/km) | DPS (nm) | Aeff ($\mu$m$^2$) | $\lambda$c (nm) |
| 1.90 | -37.3 | -0.115 | 325 | 19.7 | 807 |
| 1.95 | -34.2 | -0.098 | 348 | 19.0 | 813 |
| 2.00 | -30.5 | -0.077 | 397 | 18.6 | 820 |
| $\alpha$ = 2.0, $\Delta$2 = -0.50% | | | | | |

Table 2 shows an example of the change in characteristics such as the dispersion, the dispersion slope, the DPS, the effective core area Aeff, the cutoff wavelength $\lambda$c, etc. with respect to the diameter ratio b/a of the diameter $\underline{b}$ of the side core 12 to the diameter $\underline{a}$ of the center core 11 when $\alpha$ is made 2.0 and the apparent refractive index difference $\Delta$2 of the side core layer 12 is made -0.50%.

The diameter of the center core 11 was adjusted to give a constant value for the bending loss.

As clear from the results of Table 2, if the diameter ratio b/a becomes close to 1.70, the dispersion slope becomes more than -0.10 ps/nm$^2$/km and the DPS becomes more than 400 nm, so becomes far from the DPS of the SMF. Therefore, it becomes difficult to make the compensation rate CR higher as will be understood from formula 1 and practical realization becomes difficult.

If the diameter ratio b/a becomes close to 2.00, the dispersion rate becomes about -30 ps/nm/km and the absolute value of the dispersion rate becomes less than the targeted 35 ps/nm/km. Further, the effective core area Aeff also is a small one of less than 19 $\mu$m$^2$. If the diameter ratio b/a becomes larger in this way, it is learned that problems arise in respect to the dispersion value and compensation rate and other dispersion characteristics and in respect to the effective core area Aeff.

From the above consideration, it is learned that in this range of profile, the diameter ratio (b/a) is most suitably one of 1.80 to 1.90.

This method was used for optimization for various parameters. Further, this optimization was performed while changing the apparent refractive index difference $\Delta$1 of the center core 11.

As a result, it was learned that when the apparent refractive index difference $\Delta$1 of the center core 11 is 1.15 to 1.4%, preferably $\Delta$1 is 1.2 to 1.4%, $\alpha$ is 1.0 to 5.0, the apparent refractive index difference $\Delta$2 of the side core layer 12 is -0.60 to -0.35%, and the diameter ratio b/a is in the range of 1.6 to 2.4, it is possible to realize an RDF having a high compensation rate, an effective core area Aeff of more than 19 $\mu$m$^2$ (specifically, one in the range of 19 to 50 $\mu$m$^2$), and a low bending loss characteristic with a dispersion of -60 to -35 ps/nm/km and a DPS in the range of 200 to 400 nm.

Further, since the design was performed setting the bending loss at 20 mm$\varphi$ to a small 3 dB/m, it is possible to express a suppression of the increase in the transmission loss at the long wavelength side.

When $\alpha$ is less than 1.0, even if other parameters are optimized, the bending loss becomes more than 3 dB/m. When $\alpha$ is made more than 5.0, the DPS becomes more than 400 nm and the compensation rate falls.

If the apparent refractive index difference $\Delta$2 is made less than -0.60%, the bending loss increases, while if the apparent refractive index difference $\Delta$2 is made more than -0.35%, the compensation rate falls.

When the diameter ratio b/a is less than 1.6, the absolute value of the dispersion becomes more than 35 ps/nm/km and the effective core area Aeff becomes more than 22 $\mu$m$^2$, but the DPS becomes 600 nm or far from the DPS of the SMF and the compensation rate ends up falling. On the other hand, when more than 2.0, the absolute value of the dispersion becomes less than 35 ps/nm/km, which is insufficient, the DPS becomes more than 400 nm, the effective core area Aeff becomes less than 19 $\mu$m$^2$, and the necessary conditions can no longer be simultaneously satisfied. Therefore, the optimal value of the diameter ratio b/a is preferably in a range of about 1.8 to 1.9. Note that as the allowable range, the diameter ratio b/a may be made 1.6 to 2.4 or a range broader by about 25% from the above optimal value.

Second Embodiment

As explained above, according to the first embodiment, by optimizing the W-shaped profile, it is possible to realize an RDF with an effective core area Aeff increased to more than 19 $\mu$m$^2$ from the conventional DCF by optimizing the W-shaped profile. However, even if the diameter ratio b/a is 1.70, the effective core area is about 22 $\mu$m$^2$ at the largest. A larger effective core area Aeff is desired.

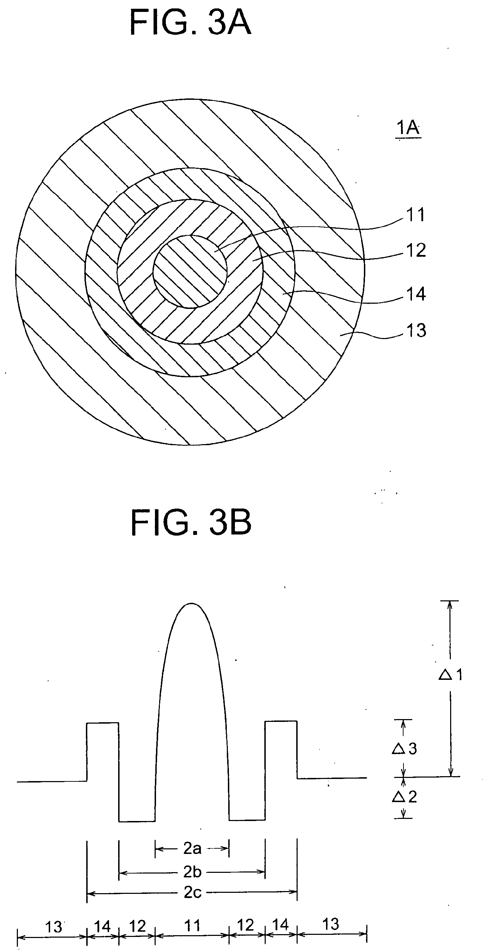

A second embodiment for realizing a larger effective core area Aeff will be explained with reference to FIGS. 3A and 3B.

The optical fiber 1A illustrated in FIG. 3A has a second side core layer 14 added between the side core layer 12 and the cladding layer 13 illustrated in FIG. 1A. Below, the side core layer 12 will be called the "first side core layer 12". The center core 11 of the optical fiber 1A is substantially the same as the center core 11 illustrated in FIG. 1A.

FIG. 3B shows the refractive index profile. The profile of the refractive index of the optical fiber 1A becomes a (W+side core) shaped profile by the addition of the second side core layer 14.

The increase of the effective core area Aeff of the optical fiber 1A was studied.

The present inventor studied increasing the effective core area Aeff by optimizing the combination of parameters when the diameter of the center core 11 was 2a, the apparent refractive index difference of the center core 11 was $\Delta1$, the diameter of the first side core layer 12 was 2b, the apparent refractive index difference of the first side core layer 12 was $\Delta2$, the diameter of the second side core layer 14 was 2c, and the apparent refractive index difference of the second side core layer 14 was $\Delta3$.

Basically, he investigated the change in the characteristics when adding the second side core layer to the outside of the W-shaped profile optimized in the above way.

The results of a simulation of the change in the characteristics due to addition of the second side core layer 14 when making the apparent refractive index difference $\Delta1$ of the center core 11 1.25%, $\alpha$ 2.0, the apparent refractive index difference $\Delta2$ of the first side core layer 12 -0.50%, and the first diameter ratio a:b = 0.5:1.0 (b/a = 2.0) are shown in Table 3.

Table 3.

| Results of Simulation When Changing Side Core Layer | | | | | | |
|---|---|---|---|---|---|---|
| $\Delta3$ (%) | c/b | Dispersion (ps/nm/km) | Slope (ps/nm$^2$/km) | DPS (nm) | Aeff ($\mu$m$^2$) | $\lambda$c |
| 0 | 0 | -30.1 | -0.071 | 380 | 20.5 | 813 |
| 0.15 | 1.50 | -43.0 | -0.148 | 2998 | 22.5 | 1256 |
| 0.20 | | -47.1 | -0.144 | 348 | 23.0 | 1391 |
| 0.25 | | -49.6 | -0.135 | 368 | 23.6 | 1516 |
| 0.30 | | -53.3 | -0.142 | 397 | 24.1 | 1629 |
| 0.15 | 1.40 | -40.6 | -0.142 | 286 | 22.0 | 1172 |
| 0.20 | | -44.3 | -0.131 | 339 | 22.8 | 1231 |
| 0.25 | | -47.4 | -0.132 | 360 | 23.2 | 1390 |
| 0.30 | | -51.6 | -0.133 | 388 | 23.8 | 1532 |
| 0.15 | 1.60 | -46.3 | -0.152 | 305 | 23.0 | 1426 |
| 0.20 | | -50.4 | -0.142 | 355 | 23.4 | 1548 |
| 0.25 | | -52.2 | -0.140 | 372 | 23.9 | 1610 |
| 0.30 | | -55.1 | -0.135 | 409 | 24.4 | 1669 |
| 0.15 | 1.30 | -37.4 | -0.138 | 271 | 21.6 | 1097 |
| 0.20 | | -39.9 | -0.123 | 324 | 22.7 | 1146 |
| 0.25 | | -45.1 | -0.127 | 355 | 23.1 | 1298 |
| 0.30 | | -49.6 | -0.130 | 382 | 23.4 | 1476 |
| 0.15 | 1.70 | -51.4 | -0.160 | 321 | 23.6 | 1515 |
| 0.20 | | -53.6 | -0.150 | 357 | 23.8 | 1639 |
| 0.25 | | -56.8 | -0.146 | 389 | 24.3 | 1702 |
| 0.30 | | -59.0 | -0.143 | 413 | 24.7 | 1776 |

As clear from the results of Table 3, by the addition of the second side core layer 14, good characteristics are obtained in terms of the absolute value of the dispersion, the DPS (in other words, the compensation rate), and the effective core area Aeff.

That is, the absolute value of the dispersion value illustrated in Table 3 is 35 ps/nm/km or larger than the absolute value of the dispersion value illustrated in Table 2, the DPS is in the range of about 300 to 400 nm, and the effective core area Aeff is in the range of 20 to 24 $\mu$m$^2$. In particular, the effective core area Aeff of the second embodiment is larger than the effective core area Aeff of the first embodiment illustrated in Table 2. Since the bending loss is not constant, it is possible to keep the bending loss small if easing the dispersion compensation or the effective core area Aeff.

If however the second side core layer 14 is made too large (if the value of the second diameter ratio c/b becomes large) or the magnitude of the apparent refractive index difference Δ3 of the second side core layer 14 is made too large, the cutoff frequency λc becomes large and the compensation rate (formula 1) when connected with the SMF becomes progressively worse.

As a result of producing various designs in this way, the second side core layer 14 giving an effective core area Aeff of over 23 μm$^2$ while maintaining the other characteristics in the range of the current profile is found to be one having an apparent refractive index difference Δ3 of 0.05 (when c/b is large) to 0.35% (when c/b is small) and a second diameter ratio c/b of 1.3 to 1.7 referring to the results illustrated in Table 3.

Third Embodiment

Optimization was attempted for an optical fiber suitable for the method of use of the optical fiber of the present invention.

Recently, it has been proved that an optical fiber can be put to practical use even if the bending loss is somewhat large by optimization of the cabling process of the optical fiber.

In particular, when using only the C-Band, even if the bending loss of the optical fiber is made somewhat large, it is sometimes preferable to stress the transmission loss as well as the dispersion-compensation rate and make the apparent refractive index difference Δ1 of the center core 11 small. In a side core type optical fiber, it is possible to suppress the bending loss even if making the apparent refractive index difference Δ1 of the center core 11 small.

If the apparent refractive index difference Δ1 of the center core 11 is made less than 0.9%, however, the bending loss becomes more than 20 dB/m or out of the usable range of an optical fiber. Therefore, it was learned that the apparent refractive index difference Δ1 of the center core 11 should be more than 0.9%.

Further, to satisfy the condition of a bending loss of less than 10 dB/m with a bending diameter of 20 mmφ generally used as an indicator of cabling of an optical fiber, it was learned that the apparent refractive index difference Δ1 of the center core 11 should be more than 1.0%.

In this way, it was learned that the apparent refractive index difference Δ1 of the center core 11 should be suitably selected to meet with the conditions of the band of the signal used and the cabling of the optical fiber. As a basic condition, however, it was learned that the apparent refractive index difference Δ1 should be in the range of 0.9 to 1.4%. The grounds for the 1.4% were explained above.

The above can be applied to both the optical fibers having the structures shown in FIGS. 1A and 1B and FIGS. 3A and 3B.

According to the examples explained later, it was possible to realize an RDF having a dispersion value of -60 to -35 ps/nm/km and a dispersion slope of -0.05 ps/nm$^2$/km in the 1.55 μm wavelength band.

Fourth Embodiment

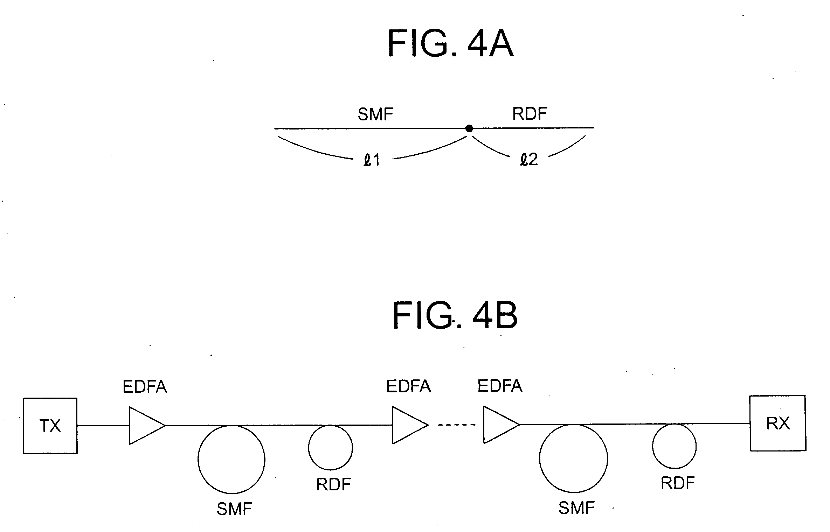

An example of a system using this RDF is shown in FIGS. 4A and 4B.

FIG. 4A illustrates a basic configuration of a unit transmission line comprised of a single SMF and a single RDF connected together.

FIG. 4B is a view of the configuration when connecting a plurality of unit lines of the SMF and RDF illustrated in FIG. 4A. TX indicates an optical signal transmitter, RX indicates an optical signal receiver, and EDFA indicates an amplifier.

By suitably adjusting the lengths 11 and 12 of the SMF and the RDF, flat dispersion characteristics for WDM transmission are obtained.

Since an optical signal first strikes the non-linear SMF, it is possible to suppress the non-linearity.

It is also possible to use another optical fiber having a large positive dispersion at 1.55 μm in place of the 1.31 zero-dispersion SMF described as an example of a SMF. As such an optical fiber, it is possible to use a cutoff shifted optical fiber (CSF) having a cutoff wavelength shifted to the long wavelength side, a pure silica optical fiber having a fluorine (F) layer as a cladding layer, or a fully fluoride doped optical fiber (FF fiber). Further, it is possible to use the enlarged effective core area type SMF disclosed in Japanese Unexamined Patent Publication (Kokai) No. 11-364609.

Examples of the characteristics of such positive dispersion optical fibers other than a SMF are shown in Table 4.

Table 4.

| Positive Dispersion Optical Fibers Similar to SMF | | | | | | | |
|---|---|---|---|---|---|---|---|
| Type of SMF | Loss (dB/km) | Dispersion (ps/nm/ km) | Slope (ps/nm$^2$ /km) | Aeff ($\mu$m$^2$) | $\lambda$c (nm) | 20$\varphi$ bending (dB/m) | DPS (nm) |
| CSF | 0.19 | 18.5 | 0.060 | 80.0 | 1500 | 1.0 | 310 |
| FF | 0.18 | 20.0 | 0.060 | 77.0 | 1500 | 1.0 | 330 |
| Aeff enlarged | 0.19 | 15.0 | 0.065 | 100.0 | 1500 | 5.0 | 230 |

As shown in Table 4, a positive dispersion optical fiber having a dispersion of 10 to 25 ps/nm/km or so is suitable as an optical fiber to take the place of a SMF. The reason is that if the dispersion is smaller than 10 ps/nm/km, the problem of FWM (four wavelength mixing) arises and the DSP becomes a small value. On the other hand, if the dispersion is larger than 25 ps/nm/km, the length ratio of the positive dispersion optical fiber becomes shorter and there is no longer any meaning even if the dispersion of the RDF is made larger.

As explained above, the present inventor developed a new type of an RDF able to be used as a line.

The low non-linearity, low transmission loss, and low PMD of the RDF are optimal characteristics for a WDM transmission line.

Further, this RDF is an optical fiber able to take on the task of WDM transmission in the future. By the completion of the profile enabling achievement of the same, it has become possible to easily produce an optical fiber suitable for high speed, large capacity transmission.

EXAMPLES

The effectiveness of the present invention will be confirmed next by examples. Prototypes of optical fibers were prepared with reference to the simulation results. The results are shown in Table 5 to Table 8.

The parameters in Table 5 to Table 8 were made close to the optimal values found by simulation and the apparent refractive index difference $\Delta$1 of the center core 11 was made small so as to try to obtain a lower loss and a low PMD.

First Example

The first example is an example of an RDF of the first embodiment explained with reference to FIGS. 1A and 1B.

The dimensions of the SMF and the DCF of the first example are shown below.

The core diameter of the SMF is 10 $\mu$m, while the cladding diameter is 125 $\mu$m.

The core diameter (effective core area Aeff) of the DCF is the value illustrated in Table 6 and 8, while the cladding diameter is 125 $\mu$m.

Table 5 shows the results of an example of a W-shaped RDF of a high compensation rate relating to the optical fiber discussed with reference to FIGS. 1A and 1B.

The two profiles of Table 5 were selected based on the results of the simulation. From the results shown in Table 5, it is possible to expect an RDF having a low non-linearity and a high compensation rate.

Table 5.

| Profiles of RDF With High Compensation Rate by Simulation | | | | | | | | | |
|---|---|---|---|---|---|---|---|---|---|
| $\Delta$ (%) | $\alpha$ | $\Delta$ (%) | b/a | Core dia. ($\mu$m) | Dispersion (ps/ nm/km) | DPS (nm) | Aeff ($\mu$m$^2$) | $\lambda$c (nm) | 20$\varphi$ ben ding (dB/ m) |
| 1.25 | 2.0 | -0.55 | 1.8 | 8.1 | -39.2 | 335 | 21.4 | 816 | 3.0 |
| 1.35 | 2.5 | -0.59 | 1.7 | 7.7 | -46.4 | 315 | 20.2 | 811 | 1.0 |

Several prototypes were prepared for profiles close to the above profile. Table 6 shows the characteristics of the prototype W-shaped RDFs.

Table 6.

| No. | Δ1 (%) | Loss (dB/km) | Dispersion (ps/ nm/km) | DPS (nm) | Aeff (μm²) | λc (nm) | 20φ bending (dB/m) | PMD (ps/√ km) | FOM (ps/nm/dB) |
|---|---|---|---|---|---|---|---|---|---|
| | | | Results of Prototypes | | | | | | |
| 01 | 1.25 | 0.255 | -37.3 | 324 | 21.2 | 829 | 3.5 | 0.06 | 149 |
| 02 | 1.25 | 0.256 | -39.3 | 304 | 20.9 | 832 | 4.0 | 0.07 | 154 |
| 03 | 1.35 | 0.267 | -45.4 | 310 | 20.2 | 821 | 1.6 | 0.09 | 170 |
| 04 | 1.35 | 0.274 | -53.2 | 315 | 20.0 | 829 | 2.0 | 0.11 | 194 |

From the results of Table 6, by obtaining a high compensation rate (suitable DPS) for the RDF while maintaining a large value of the dispersion value of -35 to -55 ps/nm/km, a low dispersion can be expected to be obtained over a broad wavelength range when connected with a SMF. Further, the loss can be kept to a low level. Further, the value of the effective core area Aeff can also be increased to more than 20.0 μm² compared with a conventional DCF. Further, since the apparent refractive index difference Δ1 of the center core 11 is relatively small, it is learned that a low non-linearity is achieved. The PMD, bending loss, and other values are also extremely good.

The transmission loss became less than 0.27 dB/km or less than the targeted 0.35 dB/km. Further, the bending loss was also a small one of less than 4 dB/m, so the transmission loss of the long wavelength band side (L-Band) was also less than 0.35 dB/km and the representative value of the transmission loss of the wavelength 1580 nm (1.58 μm) was less than 0.30 dB/km.

The FOM, that is, the ratio of the transmission loss to the dispersion, or the dispersion/transmission loss, was 146 to 194 ps/nm/dB. The FOM of a conventional RDF is 100 to 120 ps/nm/dB, so it is learned that the present example is improved in the FOM. The FOM is better the larger the value. In particular, the case of use of the RDF of the present example connected to an SMF is assumed, but if the FOM is larger, it is possible to obtain the same dispersion value even with a low transmission loss. In the case of the present example with an FOM of 170 ps/nm/dB, a 1.4 times or so better dispersion value can be obtained with the same transmission loss.

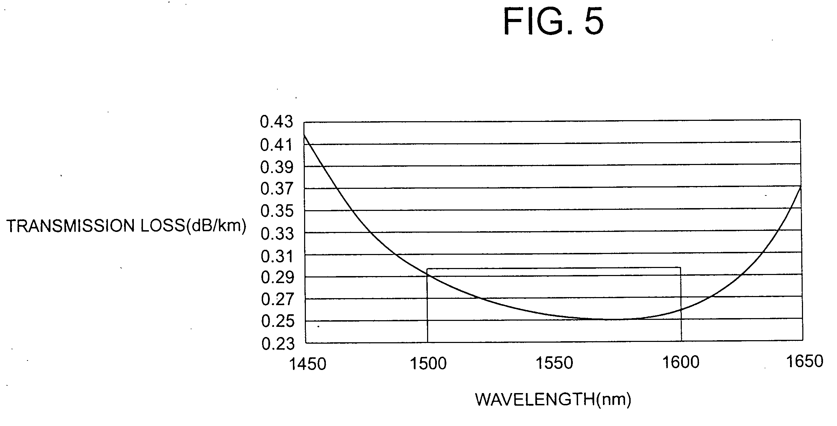

FIG. 5 is a graph of the wavelength loss characteristics of the RDF of the first example/

From FIG. 5, it is learned that the transmission loss is less than 0.30 dB/km over a wavelength of the optical signal of 1500 to 1600 nm.

The optical fiber of the present invention is intended to propagate light of a wavelength of 1400 to 1650 nm as the 1.55 μm band. It was proved that the transmission loss is low in this broad ranged band as well.

The grounds for evaluation of the difference between the transmission loss at a wavelength of 1.58 μm and the transmission loss at a wavelength of 1.55 μm will be explained next. The 1.55 μm band is the center wavelength of the C-Band. The 1.58 μm band is the end of the C-Band (start of the L-Band). There is a high possibility of use of the L-Band where the flat characteristics at the C-Band are compensated for if the difference in loss between the two is small.

Second Example

From the above results, the RDF of the first example was able to achieve an effective core area larger than that of a conventional DCF, but as a study of how to further increase the effective core area Aeff, prototypes of an RDF of the second embodiment having a (W+side core type) profile added with the second side core layer 14 explained with reference to FIGS. 3A and 3B were prepared.

The profiles used were ones giving good results in the simulation shown in Table 7. Table 7 shows the profiles of the results of simulation for the (W+side core type) RDF of the second embodiment with a high compensation rate.

Table 7.

| Δ1 (%) | α | Δ2 (%) | Δ3 (%) | a:b:c | Core dia. μm) | Dispersion (ps/nm/km) | DPS (nm) | Aeff (μm²) | λc (nm) | 20 bending (dB/m ) |
|---|---|---|---|---|---|---|---|---|---|---|
| | | | | Profiles of RDF With High Compensation Rate by Simulation | | | | | | |
| 1.10 | 2.0 | -0.55 | 0.29 | 1:2.0:3.3 | 15.9 | -44.0 | 338 | 26.8 | 1480 | 3.5 |
| 1.20 | 2.0 | -0.50 | 0.20 | 1:1.9:2.9 | 14.2 | -44.2 | 312 | 24.6 | 1386 | 2.0 |
| 1.30 | 2.5 | -0.50 | 0.25 | 1:2.1:3.2 | 13.8 | -54.4 | 327 | 23.2 | 1357 | 1.0 |

Several prototypes were made using profiles close to the above profiles. The characteristics of the prototype W-shaped RDFs are shown in Table 8. Table 8 shows the characteristics of fibers (W+side core type) prepared for the RDF of the second embodiment.

Table 8.

| | | | | | | | | | |
|---|---|---|---|---|---|---|---|---|---|
| **Results of Prototypes** | | | | | | | | | |
| No. | Δ1 (%) | Loss (dB/km) | Dispersion (ps/ nm/km) | DPS (nm) | Aeff (μm$^2$) | λc (nm) | 20φ bending (dB/m) | PMD (ps/√ km) | FOM (ps/nm/dB) |
| 01 | 1.10 | 0.237 | -43.0 | 312 | 25.9 | 1445 | 4.2 | 0.04 | 181 |
| 02 | 1.10 | 0.239 | -45.3 | 277 | 25.6 | 1495 | 3.0 | 0.05 | 190 |
| 03 | 1.20 | 0.250 | -43.1 | 314 | 25.2 | 1329 | 1.5 | 0.05 | 172 |
| 04 | 1.20 | 0.252 | -47.3 | 320 | 24.9 | 1432 | 2.2 | 0.05 | 188 |
| 05 | 1.30 | 0.263 | -53.9 | 315 | 23.2 | 1326 | 3.8 | 0.07 | 205 |
| 06 | 1.30 | 0.270 | -57.2 | 339 | 23.0 | 1395 | 4.2 | 0.09 | 212 |

According to Table 8, it is learned that a larger value is obtained compared with a W-shaped structure having a value of the effective core area Aeff of more than 23.0 μm$^2$. The FOM was also over 170 ps/nm/dB.

The other characteristics were also all extremely good. It was confirmed that the results of working the invention as explained above were excellent.

According to the present invention, if connecting with a SMF using the RDF of the present invention, it becomes possible to construct a low non-linearity WDM transmission line suitable for high speed high volume transmission.

While the invention has been described with reference to specific embodiments chosen for purpose of illustration, it should be apparent that numerous modifications could be made thereto by those skilled in the art without departing from the basic concept and scope of the invention.

**Claims**

1. An optical fiber (1) provided with
   a center core (11) and
   a first side core formed at the outside of said center core (11), wherein
   an apparent refractive index difference of said center core (11) is 1.15 to 1.40%,
   a constant α expressing a profile of a distribution of refractive index of said center core (11) is 1.0 to 5.0,
   an apparent refractive index difference of said first side core is -0.60 to -0.35,
   a diameter ratio (b/a) of a diameter (b) of said first side core layer (12) to a diameter (a) of said center core (11) is 1.6 to 2.4,
   a dispersion value is -60 to -35 ps/nm/km and a dispersion slope is -0.40 to -0.10 ps/nm$^2$/km when a wavelength of light propagated through said center core (11) is the 1.55 μm band,
   a transmission loss of 0 to 0.35 dB/km, a ratio of loss to dispersion (figure of merit (FOM)) of 120 to 500 (ps/ nm)/dB, a polarization mode dispersion (PMD) of 0 to 0.15 ps/√km, and an effective core area (Aeff) of 19 to 50 μm$^2$ when the wavelength of the light propagated through the center core (11) is the 1.55 μm band, and
   a bending loss at a diameter of 20 mm of 0 to 5 dB/m.

2. An optical fiber (1) provided with
   a center core (11) and
   a first side core formed at the outside of said center core(11), wherein
   an apparent refractive index difference of said center core (11) is 0.9 to 1.4%,
   a constant α expressing a profile of a distribution of refractive index of said center core (11) is 1.0 to 5.0,
   an apparent refractive index difference of said first side core is -0.65 to -0.35%,
   a diameter ratio (b/a) of a diameter (b) of said first side core layer (12) to a diameter (a) of said center core (11) is 1.6 to 2.4,
   a dispersion value is -60 to -35 ps/nm/km and a dispersion slope is -0.40 to -0.05 ps/nm$^2$/km when a wavelength of light propagated through said center core (11) is the 1.55 μm band,
   a transmission loss of 0 to 0.35 dB/km, a ratio of loss to dispersion (figure of merit (FOM)) of 120 to 500 (ps/ nm)/dB, a polarization mode dispersion (PMD) of 0 to 0.15 ps/√km, and an effective core area (Aeff) of 19 to 50

**EP 1 241 495 A2**

$\mu m^2$ when the wavelength of the light propagated through the center core (11) is the 1.55 $\mu m$ band, and
a bending loss at a diameter of 20 mm of 0 to 20 dB/m.

3. An optical fiber (1) as set forth in claim 2, wherein
the apparent refractive index difference of said center core (11) is 1.0 to 1.4% and
the bending loss at a diameter of 20 mm is 0 to 10 dB/m.

4. An optical fiber as set forth in claim 2 or 3, wherein
the apparent refractive index difference of said center core (11) is 1.15 to 1.4% and
the bending loss at a diameter of 20 mm is 0 to 5 dB/m.

5. An optical fiber as set forth in any one of claims 1 to 4, wherein the wavelength of the 1.55 $\mu m$ band is a band of a wavelength of 1.40 to 1.65 $\mu m$.

6. An optical fiber as set forth in any one of claims 1 to 5, wherein a ratio of the dispersion slope to the dispersion (dispersion/dispersion slope, DPS) of said optical fiber is substantially equal or close to the DPS of a 1.31 zero-dispersion single mode optical fiber.

7. An optical fiber as set forth in any one of claims 1 to 6, wherein the effective core area (Aeff) is 23 to 50 $\mu m^2$ when the wavelength of the light propagated through said center core (11) is 1.55 $\mu m$.

8. An optical fiber as set forth in any one of claims 1 to 7, wherein the transmission loss is not more than 0.27 dB/ km and the FOM is not less than 170 ps/nm/dB when the wavelength of the light propagated through said center core (11) is 1.55 $\mu m$.

9. An optical fiber as set forth in any one of claims 1 to 8, wherein
the transmission loss is not more than 0.30 dB/km when the wavelength of the light propagated through said center core (11) is 1.58 $\mu m$ and
the absolute value of the (transmission loss at the wavelength of light propagated through the center core of 1.58 $\mu m$) - (transmission loss at the wavelength of light propagated through the center core (11) of 1.55 $\mu m$) is not more than 0.01 dB/km.

10. An optical fiber as set forth in any one of claims 1 to 9, further having a second side core layer (14) formed at the outside of said first side core layer (12), having an apparent refractive index difference of 0.05 to 0.35%, and having a diameter ratio (c/b) of the diameter (c) of the second side core layer (14) with respect to the diameter (b) of the first side core layer (12) of 1.3 to 1.7.

11. A wavelength division multiplex transmission line comprised of
a 1.31 zero-dispersion single mode optical fiber or a positive dispersion optical fiber having characteristics similar to the characteristics of said single mode optical fiber (SMF) and
an optical fiber as set forth in any one of claims 1 to 10
connected together to suppress dispersion of a specific wavelength of the 1.5 $\mu m$ band to a low dispersion.

12. A wavelength division multiplex transmission line as set forth in claim 11, wherein said positive dispersion optical fiber similar in characteristics to said single mode optical fiber (SMF) includes a cutoff shifted optical fiber having a cutoff wavelength shifted to the long wavelength side, a pure silica optical fiber having a fluorine layer as a cladding layer (13), a fully fluoride doped optical fiber, and an enlarged effective core area type single mode optical fiber.

**13**

# FIG. 1A

# FIG. 1B

## FIG. 2

# FIG. 3A

1A

11
12
14
13

# FIG. 3B

Δ1
Δ3
Δ2

2a
2b
2c

13  14  12  11  12  14  13

# FIG. 4A

SMF         RDF

$\ell 1$         $\ell 2$

# FIG. 4B

TX — EDFA ▷ — SMF — RDF — EDFA ▷ ---- EDFA ▷ — SMF — RDF — RX

EP 1 241 495 A2

# FIG. 5

TRANSMISSION LOSS(dB/km)

0.43
0.41
0.39
0.37
0.35
0.33
0.31
0.29
0.27
0.25
0.23

1450   1500   1550   1600   1650

WAVELENGTH(nm)

EP 1 241 495 A2